(19) Europäisches Patentamt

European Patent Office

Office européen des brevets

(11) **EP 1 319 675 B1**

(12) **EUROPÄISCHE PATENTSCHRIFT**

(45) Veröffentlichungstag und Bekanntmachung des Hinweises auf die Patenterteilung:
**27.07.2005 Patentblatt 2005/30**

(51) Int Cl.$^7$: **C08F 283/02**, C08G 81/02, C08G 63/00

(21) Anmeldenummer: **02026978.3**

(22) Anmeldetag: **04.12.2002**

(54) **Hydroxylgruppen-haltige Polymere, deren Herstellung und Verwendung**

Hydroxy-groups containing polymers, their production process and use

Polymères portant les groupes hydroxyles, leurs procédé de production et utilisation

(84) Benannte Vertragsstaaten:
**AT BE BG CH CY CZ DE DK EE ES FI FR GB GR IE IT LI LU MC NL PT SE SI SK TR**

(30) Priorität: **13.12.2001 AT 19562001**

(43) Veröffentlichungstag der Anmeldung:
**18.06.2003 Patentblatt 2003/25**

(73) Patentinhaber: **Surface Specialties Austria GmbH**
**8402 Werndorf (AT)**

(72) Erfinder:
• **Epple, Ulrich, Dr.**
**21380 Altenburg (DE)**
• **Geisberger, Martin, Dr.**
**8045 Graz (AT)**
• **Gartler, Fritz**
**8142 Wundschuh (AT)**

(74) Vertreter: **Deckers, Hellmuth, Dr.**
**European Patent Attorney,**
**Bahnhofstrasse 26/A**
**55218 Ingelheim (DE)**

(56) Entgegenhaltungen:
**EP-A- 0 885 907**          **EP-A- 0 940 415**
**EP-A- 1 172 394**          **DE-C- 19 544 737**
**US-A- 6 048 936**

**Beschreibung**

Die Erfindung betrifft Hydroxylgruppen-haltige Polymere, ihre Herstellung und ihre Verwendung insbesondere in industriellen Beschichtungsmitteln, d. h. "high solids" Lacken mit sehr guten Applikationseigenschaften.

Heutige spritzfertige Klarlacke und pigmentierte Decklacke sowie Füllerlacke sind lösemittelärmer, d.h. sie enthalten weniger "flüchtige organische Bestandteile" ("volatile organic compounds, VOC"), die in die Atmosphäre bei deren Applikation und Trocknung abgegeben werden. Diese umweltfreundlichen Beschichtungsmittel enthalten niedermolekulare Bindemittel und Härter. Im Falle eines Zweikomponenten-Beschichtungsmittels (2K) werden Härtungsmittel eingesetzt, die bereits bei niedriger Temperatur mit den funktionellen Gruppen des Bindemittels unter Ausbildung eines vernetzten Films reagieren (üblicherweise mehrfunktionellen Isocyanate), bei Einkomponenten-Beschichtungsmittel (1K) werden Härter eingesetzt, die erst bei erhöhter Temperatur reagieren (üblicherweise Melaminharze).

Häufig sind solche Bindemittel niedermolekulare hydroxyfunktionelle Polyester oder Polyacrylate. Heute werden auch schon acrylmodifizierte Polyester oder polyestermodifizierte Acrylharze oder Mischungen dieser Harze untereinander oder mit Reaktivverdünnern versetzte derartige Harze eingesetzt (EP 0 680 977, EP 0 896 991, EP 0 940 415, DE 100 33 512.8). Reaktivverdünner sind organische Chemikalien, die die Viskosität des Beschichtungsmittels herabsetzen und mit den Härtern reagieren.

Bei all diesen Lösungsansätzen gibt es bisher Nachteile hinsichtlich Applikationssicherheit, vor allem im industriellen Einsatz von pigmentierten Decklacken und der Trocknung solcher Systeme.

Aus der DE 195 44 737 sind Bindemittel auf Polyester-Acrylat-Basis bekannt, wobei der Polyester 15 % bis 40 % der Masse ausmacht, eine molare Masse von 400 g/mol bis 1100 g/mol, Säurezahlen von 10 mg/g bis 25 mg/g und Hydroxylzahlen von 80 mg/g bis 260 mg/g aufweist und aus Massenanteilen von 43 % bis 52 % Neopentylglykol und 48 % bis 55 % Hexahydrophthalsäure oder deren Anhydrid kondensiert wird, und das Acrylatharz 60 % bis 85 % der Masse ausmacht und durch Copolymerisation von Massenanteilen von 8 % bis 32 % Hydroxyalkyl(meth)acrylaten mit 2 bis 4 Kohlenstoffatomen im Alkylrest, 40 % bis 75 % Styrol, 5 % bis 28 % Alkyl(meth)acrylaten mit 2 bis 6 Kohlenstoffatomen im Alkylrest, und 0,1 % bis 4,3 % (Meth)Acrylsäure erhältlich ist. Aus der EP 1 172 394 A2 (= DE 100 33 512) sind aliphatische niedermolekulare Polyesterpolyole bekannt, die auch in Mischung mit niedermolekularen Acrylatpolymerisaten verarbeitet werden können und schnelltrocknende Lacke ergeben. Über die Entlüftung bei der air-mix- oder airless-Applikation wird in beiden Dokumenten keine Aussage gemacht.

Pigmentierte industrielle Decklacke werden heute mit "air mix" bzw. häufig mit "air less"-Applikation bei hoher Schichtstärke (mindestens 120 µm) aufgetragen. Hier zeigen die bisherigen niedermolekulare Bindemittel hinsichtlich der Entlüftung und Trocknungsgeschwindigkeit bedeutende Nachteile. Es besteht daher die Aufgabe, solche Bindemittel bereitzustellen, die die genannten Nachteile nicht aufweisen. Auch werden heute in solchen Systemen Lackfestkörper (Festkörper-Massenanteil) von mindestens 80 % (bei einer Ausflußzeit von 90 s, Becher mit 4 mm-Düse, 23 °C) gefordert.

Überraschend hat sich gezeigt, daß die Anforderungen an Lackfestkörper, Sicherheit bei der "air mix"- und "air less"-Applikation, genügende Entlüftung und Trocknungsgeschwindigkeit erreicht werden können, wenn man in Gegenwart von speziellen niedermolekularen "harten" Hydroxylgruppen-haltigen Polyestern olefinische (z. B. Acrylat- und/oder Styrol-)Monomere polymerisiert, wobei die Komponenten bevorzugt in solchen Mengen eingesetzt werden, daß in dem erhaltenen Hydroxylgruppen-haltigen Polymer Massenanteile von 30 bis 70 % des Polyesters und 70 bis 30 % des Polymerisats aus den genannten Monomeren vorliegen, besonders bevorzugt Massenanteile von 40 bis 60 % des Polyesters und 60 bis 40 % des Polymerisats.

Die Erfindung betrifft daher Hydroxylgruppen-haltige Polymere, die Anteile von Polyestern und von Polymerisaten aus olefinisch ungesättigten Monomeren aufweisen, wobei die Polyester einen Baustein enthalten abgeleitet von Tris-hydroxyäthylisocyanurat oder Trishydroxypropylisocyanurat oder Di- oder Polyepoxy-Verbindungen **A**, einen Baustein abgeleitet von aliphatischen cyclischen Di-oder Polycarbonsäuren **B**, sowie gegebenenfalls weitere Bausteine abgeleitet von verzweigten aliphatischen acyclischen Di- oder Polyhydroxyverbindungen **C**, von aliphatischen linearen acyclischen Di- oder Polyhydroxy-Verbindungen **D**, die mindestens zwei Hydroxylgruppen je Molekül aufweisen, von polyfunktionellen Verbindungen **E,** wobei die Verbindungen **E** ausgewählt sind aus aliphatischen linearen und verzweigten Dicarbonsäuren **E1** und aromatischen Di- und Polycarbonsäuren **E2** mit mindestens zwei Carboxylgruppen pro Molekül, und von monofunktionellen Verbindungen **F**, wobei die Verbindungen **F** ausgewählt sind aus Monocarbonsäuren, Monoalkoholen und Monoepoxiden, dadurch gekennzeichnet, daß die Polyester abgeleitet sind von jeweils genau einer Verbindung aus den Verbindungen **A** und aus den Verbindungen **B** sowie nicht mehr als einer weiteren Verbindung ausgewählt aus den Gruppen **C, D, E** und **F,** und die Polymerisate Bausteine enthalten von olefinisch ungesättigten Alkylestern **G** von aliphatischen, linearen, verzweigten oder cyclischen olefinisch ungesättigten Monocarbonsäuren und/oder Dicarbonsäuren, olefinisch ungesättigten Hydroxyalkylestern **H** von einer der unter **G** genannten Säuren, mindestens einem weiteren olefinisch ungesättigten Monomeren I ausgewählt aus Vinylaromaten, Vinylestern, halogenierten Monomeren, ungesättigten Nitrilen, Amiden bzw. Diamiden von ungesättigten Monocarbonsäuren, Vinyl- und Allyläthern, sowie gegebenenfalls Carbonsäuren **J,**

ausgewählt aus den unter **G** genannten Monocarbonsäuren oder Dicarbonsäuren in unveresterter oder halbveresterter Form.

Die Hydroxylgruppen-haltigen Polymere haben bevorzugt eine Hydroxylzahl von 40 bis 250 mg/g, besonders bevorzugt 70 bis 200 mg/g, und insbesondere 80 bis 180 mg/g. Ihre Säurezahl beträgt bevorzugt 0 bis 30 mg/g, besonders bevorzugt 0,5 bis 20 mg/g, und insbesondere 1 bis 15 mg/g. Ihre Lösungsviskosität, gemessen an einer 50 %igen Lösung in Butylacetat (50 g Polymer in 100 g der Lösung) bei 23 °C nach DIN EN ISO 3219, beträgt bevorzugt 5 bis 40 mPa·s, besonders bevorzugt 10 bis 35 mPa·s, und insbesondere 15 bis 32 mPa·s. Ihre mittlere molare Masse (Gewichtsmittel $M_w$, gemessen durch Gelpermeationschromatographie, Eichung mit Polystyrol-Standards) beträgt bevorzugt höchstens 3500 g/mol, besonders bevorzugt 1500 bis 3300 g/mol, und insbesondere 1700 bis 3200 g/mol. Die Polydispersität $M_w/M_n$, wobei $M_n$ die auf die gleiche Weise bestimmte zahlenmittlere molare Masse ist, beträgt bevorzugt höchstens 3,5, besonders bevorzugt höchstens 3,0.

Die Säurezahl ist gemäß DIN EN ISO 3682 definiert als der Quotient derjenigen Masse $m_{KOH}$ an Kaliumhydroxid, die erforderlich ist, um eine zu untersuchende Probe zu neutralisieren, und der Masse $m_B$ dieser Probe (Masse des Feststoffes in der Probe bei Lösungen oder Dispersionen); ihre übliche Einheit ist "mg/g". Die Hydroxylzahl ist gemäß DIN EN ISO 4629 definiert als der Quotient derjenigen Masse $m_{KON}$ an Kaliumhydroxid, die genausoviel Hydroxylgruppen aufweist wie eine zu untersuchende Probe, und der Masse $m_B$ dieser Probe (Masse des Feststoffes in der Probe bei Lösungen oder Dispersionen); ihre übliche Einheit ist "mg/g".

Die Polyester sind frei von olefinischen Doppelbindungen und weisen bevorzugt eine gewichtsmittlere molare Masse $M_w$ von bis zu 1750 g/mol, besonders bis zu 1500 g/mol und insbesondere bis zu 1400 g/mol auf (Gelpermeationschromatographie, Eichung mit Polystyrol-Standards). Sie besitzen (berechnete) Hydroxylzahlen von 80 bis 280 mg/g, bevorzugt mindestens 150 mg/g, und Säurezahlen von 5 bis 40 mg/g, jeweils auf Festharz bezogen. Bei Raumtemperatur (23 °C) sind sie bevorzugt fest und kleben nicht.

Besonders geeignete Polyester sind Kondensationsprodukte der folgenden Ausgangsstoffe, wobei die Massenanteile der von diesen Stoffen abgeleiteten Bausteine im Polyester in % = cg/g angegeben sind:

- 10 bis 90 %, insbesondere 15 bis 80 % von den Verbindungen **A**,
- 10 bis 90 %, insbesondere 15 bis 80 % von den Verbindungen **B**,

sowie bevorzugt nur eines aus den folgenden

- bis zu 55 %, insbesondere bis zu 40 % von den Verbindungen **C**,
- bis zu 55 % von aliphatischen linearen acyclischen Di- oder Polyhydroxy-Verbindungen **D**, die mindestens zwei Hydroxylgruppen je Molekül aufweisen,
- bis zu 30 % von polyfunktionellen Verbindungen **E**, wobei die Verbindungen **E** ausgewählt sind aus aliphatischen linearen und verzweigten Dicarbonsäuren **E1** und aromatischen Di- und Polycarbonsäuren **E2** mit mindestens zwei Carboxylgruppen pro Molekül, und
- bis zu 35 % von monofunktionellen Verbindungen **F**, wobei die Verbindungen **F** ausgewählt sind aus Monocarbonsäuren, Monoalkoholen und Monoepoxiden.

Bevorzugt enthalten sie maximal drei aliphatische Bausteine aus den Gruppen **A, B** und einer der weiteren Gruppen, also jeweils von nur einer Verbindung aus diesen Gruppen. Soweit die Summe der Massenanteile von Strukturbausteinen abgeleitet von **A**, **B** und einer dritten Verbindung ausgewählt aus **C**, **D**, **E**, oder **F** mindestens 90 %, bevorzugt mindestens 93 %, und insbesondere mindestens 95 % beträgt, ist es auch möglich, für die Erfindung einen Polyester zu verwenden, der Strukturbausteine aus einer vierten Gruppe enthält.

Weiter ist es im Rahmen der Erfindung möglich und bevorzugt, Mischungen von zwei oder mehreren solcher Polyester unterschiedlicher Zusammensetzung einzusetzen.

Als Verbindungen **A** werden Trishydroxyäthylisocyanurat oder Trishydroxypropylisocyanurat oder aliphatische cyclische oder polycyclische Di- oder Polyepoxy-Verbindungen **A2** eingesetzt. Die Verbindungen **A** haben 5 bis 30 Kohlenstoffatome.

Die Verbindungen **A2** werden bevorzugt durch Umsetzung von reaktiven Epoxidgruppenhaltigen Verbindungen mit cyclischen Verbindungen hergestellt, die aktive Wasserstoffatome enthalten. So ist beispielsweise durch Umsetzung von Epichlorhydrin mit Isocyanursäure das bevorzugte Triglycidylisocyanurat zugänglich, andere epoxid-funktionelle Verbindungen lassen sich beispielsweise durch Umsetzen von Epichlorhydrin mit den genannten cyclischen Harnstoffen herstellen, beispielsweise Diglycidyläthylenharnstoff, Diglycidylparabansäure oder Tetraglycidylacetylenharnstoff.

Die aliphatischen cyclischen Di-oder Polycarbonsäuren **B** bzw. deren Anhydride haben 6 bis 20 Kohlenstoffatome und sind bevorzugt ausgewählt aus den cyclischen Dicarbonsäuren 1,2- und 1,4-Cyclohexandicarbonsäure, der cis-5-Norbornen-endo-2,3-dicarbonsäure und der 5-Methylnorbornen-2,3-dicarbonsäure ("nadic acid") und der 1,4,5,6,7,7-Hexachloro-5-norbornen-2,3-dicarbonsäure ("chlorendic acid"), deren Anhydriden sowie der Tricarbonsäure 1,3,5-Cyclohexantricarbonsäure und deren Anhydrid.

Die verzweigten aliphatischen acyclischen Di- oder Polyhydroxyverbindungen **C** haben bevorzugt 2 bis 20 Kohlenstoffatome, wobei die Dihydroxyverbindungen besonders bevorzugt 2 bis 9, und die Polyhydroxyverbindungen besonders bevorzugt 3 bis 12 Kohlenstoffatome aufweisen. Unter den Dihydroxyverbindungen sind 1,2-Propandiol, Neopentylglykol, 2-Methylpropandiol-1,3, 2-Methyl-2-butyl-propandiol-1,3, 2,2,4-Trimethylpentandiol-1,5 und 2,2,4- sowie 2,4,4-Trimethylhexandiol-1,6 besonders bevorzugt. Als verzweigte Tri- und Polyhydroxy-Verbindungen werden Trimethyloläthan und -propan, Pentaerythrit, Diglycerin, Ditrimethylolpropan, Ditrimethyloläthan und Dipentaerythrit bevorzugt. Es ist ebenfalls möglich, Umsetzungsprodukte dieser Alkohole mit Oxiran und/oder Methyloxiran einzusetzen.

Die aliphatischen linearen acyclischen Di- oder Polyhydroxy-Verbindungen D, die mindestens zwei Hydroxylgruppen je Molekül aufweisen, haben zwei bis 20 Kohlenstoffatome und sind bevorzugt ausgewählt aus Glykol, 1,3-Propandiol, 1,4-Butandiol, 1,6-Hexandiol, Glycerin, 1,2,6-Trihydroxyhexan, 1,2,3-Trihydroxyheptan, Erythrit, Sorbit, Xylit und Mannit. Es ist auch möglich, Oligomere des Äthylenglykols wie Diglykol, Triglykol und Tetraäthylenglykol einzusetzen.

Die polyfunktionellen Verbindungen **E** können aliphatische lineare und verzweigte Dicarbonsäuren **E1,** aromatische Di- und Polycarbonsäuren **E2** mit mindestens zwei Carboxylgruppen pro Molekül, und aliphatische Polycarbonsäuren **E3** mit mindestens 3 Carboxylgruppen und jeweils 2 bis 40 Kohlenstoffatomen sein. Die Dicarbonsäuren **E1** sind bevorzugt Oxalsäure, Malonsäure, Bernsteinsäure, Glutarsäure, Adipinsäure, Pimelinsäure, Korksäure, Sebacinsäure, Dimethylbernsteinsäure, Butylmalonsäure, Diäthylmalonsäure, Dimethylglutarsäure, Methyladipinsäure sowie die hydrierten Fettsäure-Dimerisate und deren Gemische, die aromatischen Di- und Polycarbonsäuren **E2** sind bevorzugt Phthalsäure, Isophthalsäure und Terephthalsäure, 1,4-, 2,3- und 2,6-Naphthalindicarbonsäuren, 4,4'-Diphenyldicarbonsäure, 4,4'-Diphenylätherdicarbonsäure 4,4'-Diphenylsulfondicarbonsäure, 4,4'-Benzophenondicarbonsäure, Trimellithsäure, Trimesinsäure, Pyromellithsäure und Benzophenontetracarbonsäure. Unter den aliphatischen Polycarbonsäuren **E3** werden Tricarballylsäure, Citronensäure, 1,3,5-Cyclohexantricarbonsäure, 1,1,2-Äthantricarbonsäure und Nitrilotriessigsäure bevorzugt.

Die monofunktionellen Verbindungen **F** sind ausgewählt sind aus Monocarbonsäuren, Monoalkoholen und Monoepoxiden, mit jeweils 1 bis 20 Kohlenstoffatomen. Bevorzugt sind unter den Monocarbonsäuren Essigsäure, 2-Äthylhexansäure, Isononansäure und Benzoesäure, unter den Monoalkoholen solche mit 2 bis 20 Kohlenstoffatomen wie Äthanol, n-, iso-, sec.- und tert.-Butanol, Amylalkohol, 2-Äthylhexanol, Isononylalkohol und Isotridecylalkohol, unter den Monoepoxiden insbesondere die Glycidyläther oder Glycidylester einwertiger aliphatischer Alkohole bzw. Säuren, wie Butylglycidyläther und n-Hexylglycidyläther, Glycidylacetat, Glycidyl-2-äthylhexanoat sowie die Glycidylester von in $\alpha$-Stellung verzweigten aliphatischen Monocarbonsäuren, wie $\alpha$-Methylalkansäuren und $\alpha,\alpha$-Dimethylalkansäuren, z. B. Glycidylneopentanoat und Glycidylneodecanoat.

Anstelle der Säuren und Hydroxyverbindungen lassen sich auch esterbildende Derivate dieser Verbindungen einsetzen, nämlich Ester der Säuren mit niederen Alkoholen mit 1 bis 6 Kohlenstoffatomen, die linear oder verzweigt sein können, wie z.B. Methylester der Säuren, sowie Anhydride und Säurehalogenide, und Ester der Hydroxyverbindungen mit flüchtigen Säuren, wie z. B. Acetate oder Propionate der Hydroxyverbindungen.

In einer weiteren bevorzugten Ausführungsform der Erfindung ist es auch möglich, die niedermolekularen Hydroxylgruppen-haltigen Polyester zumindest teilweise mit Phosphorsäure, phosphoriger Säure oder organischen Phosphonsäuren oder deren Teilestern zu verestern.

Die niedermolekularen Hydroxylgruppen-haltigen Polyester werden auf die bekannte Weise durch Mischen der Edukte und gemeinsame Kondensation bei erhöhter Temperatur hergestellt. Die Kondensationsreaktion läßt sich in bekannter Weise dadurch beschleunigen, daß das bei der Reaktion gebildete Wasser (oder andere Kondensate bei der Verwendung von Derivaten der eingesetzten Säuren und Alkohole) durch Destillation unter vermindertem Druck entfernt wird. Die Polykondensation läßt sich auch in Lösungsmitteln durchführen, die mit Wasser ein Azeotrop bilden; durch Destillieren, Abtrennen des Wassers und Rückführen des Lösungsmittels läßt sich die Polykondensation besonders effizient ausführen. Die Polykondensation kann auch in Gegenwart von Katalysatoren durchgeführt werden.

Für die vorliegende Erfindung ist eine Polykondensation in Masse, d. h. ohne Zusatz oder Gegenwart von Lösungsmitteln, bevorzugt. Es ist weiter bevorzugt, durch Zusatz von reduzierenden Agenzien bei der Kondensation Verfärbungen des erzeugten Polyesters zu vermeiden. Dazu lassen sich beispielsweise Phosphite oder Verbindungen der unterphosphorigen Säure einsetzen, auch Wasserstoffperoxid kann zugesetzt werden.

Nach der Polykondensation können die niedermolekularen Polyester mit frei wählbaren Lösungsmitteln bzw. Lösungsmittelgemischen zu einem wählbaren Anteil angelöst werden.

Die Polymerisate, die ebenfalls Bestandteil der Hydroxylgruppen-haltigen Polymeren sind, leiten sich ab von olefinisch ungesättigten Alkylestern **G,** wobei die von diesen abgeleiteten Strukturbausteine im Polymerisat bevorzugt in einem Massenanteil von 20 bis 60 % vorliegen. Bevorzugt werden hier Alkyl(meth)acrylate oder Dialkylester von den ungesättigten Dicarbonsäuren Maleinsäure und Fumarsäure eingesetzt, z. B. Methyl(meth)acrylat, Äthyl(meth)acrylat, n- und isoPropyl(meth)acrylat, n-, iso- und tert.-Butyl(meth)acrylat, Isobornyl- und Isofenchyl(meth)acrylat.

Sie enthalten des weiteren Bausteine abgeleitet von olefinisch ungesättigten Hydroxyalkylestern **H** von einer der oben unter **G** genannten Säuren in einem Massenanteil von bevorzugt 10 bis 40 %. Bevorzugt werden Hydroxyäthyl(meth)acrylat, 2-Hydroxypropyl(meth)acrylat, 3-Hydroxypropyl(meth)acrylat und 1 -Methyl-2-hydroxyäthyl(meth)acrylat sowie 4-Hydroxybutyl(meth)acrylat.

Weiter sind enthalten Bausteine abgeleitet von den olefinisch ungesättigten Monomeren **I** in einem Massenanteil von bevorzugt 20 bis 60 %. Bevorzugt werden hier Styrol, α-Methylstyrol, Vinyltoluol, Acryl- und Methacrylnitril, Acrylamid und Methacrylamid.

Weiter sind enthalten Bausteine abgeleitet von den Carbonsäuren **J** in einem. Massenanteil von bevorzugt bis zu 20 %, insbesondere 1 bis 15 %. Die bevorzugten Carbonsäuren sind Acryl- und Methacrylsäure.

Die Polymerisation der genannten Monomeren erfolgt in Gegenwart des niedermolekularen Hydroxylgruppen-haltigen Polyesters. Dabei können sich Pfropfpolymerisate bilden, wobei mindestens eines der Polyestermoleküle durch Abstraktion eines Wasserstoffatoms durch ein Radikal mit diesem chemisch verbunden wird, weiter bilden sich aber auch einfache (physikalische) Mischungen. Diese Mischungen aus Pfropfpolymeren und den nebeneinander vorliegenden Polyestern und Polymerisaten werden im folgenden als "Schoßpolymere" bezeichnet.

Die Polymerisation wird vorzugsweise in Substanz (am Polymerisationsende als "Massepolymerisation") vorgenommen. Unter dem Begriff "Substanzpolymerisation" ist eine Polymerisation zu verstehen, die in der Regel ohne Lösungsmittel durchgeführt wird. In manchen Fällen ist jedoch auch die Anwesenheit von einem geringen Lösungsmittelanteil möglich, nämlich in einem Massenanteil von bis zu 20, vorzugsweise bis zu 10 und insbesondere bis zu 5 %, bezogen auf die Summe der Massen der Ausgangskomponenten. Jedoch ist das Arbeiten ohne Lösungsmittel vorzuziehen.

Als Polymerisationsinitiatoren kommen die üblichen radikalbildenden Verbindungen einzeln oder im Gemisch in Frage, wie Peroxide, Hydroperoxide, Persäuren, Perketale, Perester und Azoverbindungen. Solche sind z.B. aliphatische Azoverbindungen, Diacylperoxide, Peroxydicarbonate, Alkylperester, Alkylhydroperoxide, Perketale, Dialkylperoxide oder Ketonperoxide. Bevorzugt werden Dialkylperoxide, wie Di-t-butylperoxid oder Di-t-amylperoxid und Alkylperester, wie t-Butylperoxy-2-äthylhexanoat oder t-Amylperoxy-2-äthylhexanoat. Die Menge der Initiatoren wird so gewählt, daß das Verhältnis ihrer Masse zur Masse der olefinisch ungesättigten Monomeren 0,5 bis 5 %, vorzugsweise bis 4 %, insbesondere bis 3,5 % beträgt.

Die Polymerisation kann diskontinuierlich ("batch") oder kontinuierlich durchgeführt werden, in einer Stufe oder in mehreren Stufen, wobei die Umsetzungen in verschiedenen Reaktionsgefäßen oder in demselben Reaktionsgefäß nacheinander vorgenommen werden können. Es ist weiter möglich, bei einer mehrstufigen Verfahrensweise die Umsetzung in einer Stufe kontinuierlich und in einer anderen Stufe diskontinuierlich durchzuführen.

Die erfindungsgemäßen Hydroxylgruppen-haltigen Polymere - allein und in Mischung - eignen sich besonders gut für lacktechnische Anwendungen in Ein- bzw. Zwei-Komponenten-Systemen, insbesondere für sogenannte "highsolid"-Systeme, also für lösungsmittelhaltige Mischungen mit hohem Festkörper-Massenanteil.

Geeignete Lösungsmittel für die erfindungsgemäßen Hydroxylgruppen-haltigen Polymere bzw. die diese enthaltenden Mischungen sind z.B. aliphatische, cycloaliphatische und aromatische Kohlenwasserstoffe, wie Alkylbenzole, z.B. Xylol, Toluol; Ester, wie Äthylacetat, Butylacetat, Acetate mit längeren Alkoholresten, Butylpropionat, Pentylpropionat, Äthylenglykolmonoäthylätheracetat, das entsprechende Methylätheracetat und Propylenglykol-methylätheracetat; Äther, wie Äthylenglykolmonoäthyl-, -methyl- oder -butyl-äther; Glykole; Alkohole; Ketone wie Methylisoamylketon, Methylisobutylketon; Lactone und Gemische derartiger Lösungsmittel. Als Lösungsmittel sind auch Umsetzungsprodukte von Lactonen mit Glykolen oder Alkoholen einsetzbar.

Gegenstand der vorliegenden Erfindung sind weiterhin Beschichtungsmittel, die die erfindungsgemäßen Hydroxylgruppen-haltigen Polymere, gegebenenfalls in Abmischung mit anderen organischen Polyhydroxyverbindungen oder mit Reaktivverdünnern (niedermolekularen Verbindungen, die allein oder auch gemeinsam mit den niedermolekularen Hydroxylgruppen-haltigen Polymeren wie Acrylcopolymeren und Polyestern oder anderen Mischungskomponenten mit den verwendeten Härtern reagieren) enthalten. Insbesondere sind Acrylat-Copolymerisate z. B. aus den oben beschriebenen Monomeren als Mischungskomponente geeignet. Diese festkörperreichen Beschichtungsmittel werden insbesondere angewendet in der Lackierung von Metallen (vor allem bei allgemeinen Industrie-Anwendungen, wie z. B. Stahlbrücken, Leitungsmasten, Containern, Schiffen, Windkraftanlagen, sowie bei der Automobil-Serien- und -Reparaturlackierung), der Kunststoff- und Holzlackierung sowie im Bereich der Beschichtung von Textilien, Leder, Papier und Baustoffen.

Als Härterkomponente eignen sich in diesen Beschichtungsmitteln Aminoplastharze, Polyisocyanate oder Anhydridgruppen enthaltende Verbindungen einzeln oder in Kombination. Der Härter wird jeweils in solch einer Menge zugesetzt, daß das Verhältnis der Anzahl der OH-Gruppen des Hydroxylgruppen-haltigen Polymeren (bzw der diese enthaltenden Mischungen) zur Anzahl der reaktiven Gruppen des Härters zwischen 0,3 : 1 und 3 : 1 liegt.

Als Härterkomponente geeignete Aminoplastharze sind bevorzugt Harnstoff-, Melamin- und/oder Benzoguanaminharze. Es handelt sich hierbei um vorzugsweise verätherte Harnstoff-, Melamin- bzw. Benzoguanamin-Formaldehyd-Kondensationsprodukte. Geeignete Mischungen liegen im Bereich von 50 : 50 bis 90 : 10 für die Verhältnisse der Massen der Hydroxylgruppen-haltigen Polymeren und der Härter, jeweils auf die Masse des Festharzes bezogen. Geeignete Phenolharze und ihre Derivate können auch als Härter eingesetzt werden. Diese Härter führen in Gegenwart von Säuren, z.B. p-Toluolsulfonsäure zur Aushärtung der Beschichtung. Die Heißhärtung kann in üblicher Weise bei Temperaturen von 85 bis 200 °C, z.B. in 10 bis 30 Minuten vorgenommen werden.

Für die Härtung der erfindungsgemäßen Produkte unter Vernetzung eignen sich Polyisocyanate, besonders bei moderaten Temperaturen bzw. bei Raumtemperatur. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise gut geeignet sind niedermolekulare Polyisocyanate wie Hexamethylendiisocyanat, 2,2,4- und 2,4,4-Trimethyl-1,6-hexamethylendiisocyanat, Dodekamethylendiisocyanat, Tetramethyl-p-xylylendiisocyanat, 1,4-Diisocyanatocyclohexan, 1-Isocyanato-3,3,5-trimethyl-5-isocyanatomethyl-cyclohexan (IPDI), 2,4'- und 4,4'-Diisocyanato-dicyclohexylmethan, 2,4'- und 4,4'-Diisocyanato-diphenylmethan sowie Gemische dieser Isomeren mit ihren höheren Homologen, wie sie in an sich bekannter Weise durch Phosgenierung von Anilin/Formaldehyd-Kondensaten zugänglich sind, 2,4- und 2,6-Diisocyanatotoluol und beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören Polyisocyanate, die beispielsweise Biuretgruppen, Uretdiongruppen, Isocyanuratgruppen, Urethangruppen, Carbodiimidgruppen oder Allophanatgruppen aufweisen. '

Zu den besonders bevorzugten modifizierten Polyisocyanaten gehören das N,N',N''-Tris-(6-isocyanatohexyl)-biuret und seine Gemische mit seinen höheren Homologen, sowie das N,N',N''-Tris-(6-isocyanatohexyl)-isocyanurat bzw. dessen Gemische mit seinen höheren, mehr als einen Isocyanuratring aufweisenden Homologen.

Für eine Härtung bei erhöhter Temperatur kommen zusätzlich verkappte Polyisocyanate, sowie Polycarbonsäuren und deren Anhydride in Frage.

Die erfindungsgemäßen Hydroxylgruppen-haltigen Polymere und die diese enthaltenden Mischungen eignen sich besonders gut zur Herstellung von festkörperreichen, lösungsmittelhaltigen Klar- und Decklacken sowie für Füller.

In Beschichtungsmitteln, die mit den erfindungsgemäßen Hydroxylgruppen-haltigen Polymeren bzw. den diese enthaltenden Mischungen hergestellt werden, können auch andere in der Beschichtungstechnologie übliche Hilfs- und Zusatzmittel enthalten sein, die bisher noch nicht genannt sind. Hierzu gehören insbesondere Katalysatoren, Verlaufsmittel, Siliconöle, Zusatzstoffe wie Celluloseester, besonders Celluloseacetobutyrat, Weichmacher, wie Phosphorsäureester und Phthalsäureester, Pigmente wie Eisenoxide, Bleioxide, Bleisilikate, Titandioxid, Bariumsulfat, Zinksulfid, Phthalocyaninkomplexe etc. und Füllstoffe wie Talkum, Glimmer, Kaolin, Kreide, Quarzmehl, Asbestmehl, Schiefermehl, verschiedene Kieselsäuren, Silikate etc., viskositätsbeeinflussende Zusätze, Mattierungsmittel, UV-Absorber und Lichtschutzmittel, Antioxidantien und/oder Peroxidzersetzer, Entschäumer und/oder Netzmittel, aktive Verdünner, Reaktivverdünner und dergleichen.

Die Beschichtungsmittel können nach bekannten Methoden, beispielsweise durch Streichen, Tauchen, Gießen, Fluten oder mit Hilfe von Walzen oder Rakeln, insbesondere aber durch Spritzen auf das jeweilige Substrat aufgetragen werden. Sie können in der Wärme appliziert werden, gegebenenfalls können sie durch Eindrücken von superkritischen Lösungsmitteln (z.B. $CO_2$) in eine applikationsfertige Form gebracht werden. Industrie-, Auto-, Kunststoff-, Holz-, Baustoff- und Textillacke mit ausgezeichneten Eigenschaften lassen sich mit Bindemitteln oder BindemittelMischungen erhalten, die mit den erfindungsgemäßen Hydroxylgruppen-haltigen Polymeren hergestellt werden. Diese Bindemittel können sowohl zur Herstellung von Grundierungen und Zwischenschichten als auch von pigmentierten oder unpigmentierten Decklacken eingesetzt werden.

Hierzu werden die Lacke im allgemeinen innerhalb des Temperaturbereichs von -20 bis +100 °C, vorzugsweise von -10 bis +80 °C ausgehärtet.

In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung).

**Beispiele**

**1 Synthese der Polyester**

Gemäß den Zusammensetzungen in der Tabelle 1 wurden Polyester durch Polykondensation aus den Ausgangsstoffen hergestellt. Dazu wurden die Ausgangsstoffe unter Stickstoff in einem Reaktionsgefäß auf 190 bis 200 °C erhitzt, das dabei gebildete Reaktionswasser wurde laufend entfernt. Die Temperatur wurde dann allmählich auf 220 °C erhöht, bis die Säurezahl eine Wert zwischen 20 und 30 mg/g erreicht hatte. Die Polyester wurden ausgegossen und nach dem Erkalten zermahlen.

Tabelle 1

| Massenanteile der Ausgangsstoffe in der Reaktionsmischung in % (cg/g) | | | |
|---|---|---|---|
| | Polyester 1 | Polyester 2 | Polyester 3 |
| THEIC | 15,8 | 59,2 | 41,0 |
| NPG | 37,8 | - | - |
| EHS | - | 13 | - |
| E10 | - | - | 30,1 |
| HHPSA | 46,4 | 27,8 | 28,9 |

Dabei bedeuten

THEIC Tris-hydroxyäthyl-isocyanurat

NPG Neopentylglykol

EHS 2-Äthylhexansäure

E10 Glycidylester von in $\alpha$-Stellung verzweigten Alkansäuren mit durchschnittlich 10 Kohlenstoffatomen (®Versatic-10-Säure)

HHPSA Hexahydrophthalsäureanhydrid

An diesen Polyestern wurden die folgenden Eigenschaften bestimmt:

Tabelle 2

| Eigenschaften der Polyester | | | |
|---|---|---|---|
| | Polyester 1 | Polyester 2 | Polyester 3 |
| Klebrigkeit (Daumenprobe) bei 23 °C | nein | nein | nein |
| Säurezahl          in mg/g | 23,5 | 24,3 | 20,8 |
| Hydroxylzahl          in mg/g | 205 | 196 | 193 |
| $M_w$       1360       in g/mol | | | 1265 |
| $M_n$          in g/mol | 685 | 700 | 770 |
| $M_w/M_n$ | 1,7 | 2,0 | 1,6 |

Die Werte wurden gemäß den weiter oben beschriebenen Methoden ermittelt

Obwohl die molaren Massen der Polyester im Bereich der bei Oligomeren üblichen Werte liegen, sind die Polyester bei Raumtemperatur fest und zeigen keine Klebrigkeit.

**2 Synthese der Schoßpolymeren**

Polymer 2a

In einen mit Rührer, Heizung, Inertgaseinleitung und Zugabeeinrichtung ausgerüsteten Reaktor wurden 321 g des Polyesters 1 aus Beispiel 1 unter Stickstoffüberlagerung auf 200 °C aufgeheizt. Innerhalb von 6 Stunden wurden 128 g n-Butylacrylat, 73,5 g Hydroxyäthylmethacrylat und 119,5 g Styrol durch einen Tropftrichter gleichmäßig zudosiert. Gleichzeitig wurden innerhalb von 6 Stunden 9,6 g Di-tert.-Butylperoxid zugefügt. Nach dem Ablauf von 6 Stunden wurde mit weiteren 1 g Di-tert.-Butylperoxid, gelöst in 3,2 g Butylacetat, nachinitiiert, die Mischung wurde weitere 2 Stunden unter Rühren gehalten. Nach Abkühlen wurde das erhaltene Polymer durch Zugabe von 133,5 g Butylacetat auf einen Festkörper-Massenanteil von ca. 80,0 % (bestimmt nach DIN EN ISO 3251) eingestellt.

Das erhaltene Polymer 2a war hochtransparent und besaß die folgenden Kenngrößen: Säurezahl 9,3 mg/g, Hydroxylzahl 140 mg/g, dynamische Viskosität (gemessen nach DIN EN ISO 3219 bei 23 °C in Lieferform, d. i. in der oben genannten Verdünnung) 5860 mPa·s, dynamische Viskosität (gemessen nach DIN EN ISO 3219 bei 23 °C an einer Lösung, die mit weiterem Butylacetat auf einen Festkörper-Massenanteil von 50 % verdünnt wurde) 23 mPa·s. Die gewichtsmittlere molare Masse $M_w$ betrug 2605 g/mol, die Polydispersität $M_w/M_n$ war 2,4 (Gelpermeationschromatographie, Polystyrolstandards).

**Polymer 2b und 2c**

In einen mit Rührer, Heizung, Inertgaseinleitung und Zugabeeinrichtung ausgerüsteten Reaktor wurden 320 g des Polyesters 2 aus Beispiel 1 unter Stickstoffüberlagerung auf 200 °C aufgeheizt. Innerhalb von 6 Stunden wurden 128 g n-Butylacrylat, 82 g Hydroxypropylmethacrylat und 111 g Styrol durch einen Tropftrichter gleichmäßig zudosiert. Gleichzeitig wurden innerhalb von 6 Stunden 9,6 g Di-tert.-Butylperoxid zugefügt. Nach dem Ablauf von 6 Stunden wurde mit weiteren 1 g Di-tert.-Butylperoxid, gelöst in 3,2 g Butylacetat, nachinitiiert, die Mischung wurde weitere 2 Stunden unter Rühren gehalten. Nach Abkühlen wurde das erhaltene Polymer durch Zugabe von ca. 130 g Butylacetat auf einen Festkörper-Massenanteil von ca. 79,5 % (bestimmt nach DIN EN ISO 3251) eingestellt.

Das erhaltene Polymer 2b war hochtransparent und besaß die folgenden Kenngrößen: Säurezahl 9,5 mg/g, Hydroxylzahl 142 mg/g, dynamische Viskosität (gemessen nach DIN EN ISO 3219 bei 23 °C in Lieferform, d. h. in der oben genannten Verdünnung) 9130 mPa·s, dynamische Viskosität (gemessen nach DIN EN ISO 3219 bei 23 °C an einer Lösung, die mit weiterem Butylacetat auf einen Festkörper-Massenanteil von 50 % verdünnt wurde) 31 mPa·s. Die gewichtsmittlere molare Masse $M_w$ betrug 2910 g/mol, die Polydispersität $M_w/M_n$ war 2,6 (Gelpermeationschromatographie, Polystyrolstandards).

In gleicher Weise wurde das Polymer 2c aus dem Polyester 3 aus Beispiel 1 und denselben Monomeren in denselben Mengen hergestellt. Auch das Polymer 2c war hochtransparent und besaß die folgenden Kenngrößen: Säurezahl 5,0 mg/g, Hydroxylzahl 141 mg/g, dynamische Viskosität (gemessen nach DIN EN ISO 3219 bei 23 °C in Lieferform, d. i. in der oben genannten Verdünnung) 5100 mPa·s, dynamische Viskosität (gemessen nach DIN EN ISO 3219 bei 23 °C an einer Lösung, die mit weiterem Butylacetat auf einen Festkörper-Massenanteil von 50 % verdünnt wurde) 20 mPa·s. Die gewichtsmittlere molare Masse $M_w$ betrug 2295 g/mol, die Polydispersität $M_w/M_n$ war 2,3 (Gelpermeationschromatographie, Polystyrolstandards).

**3 Herstellung von Ultrahigh-Solids-Klarlacken**

Klarlacke mit einer Auslauf-Viskosität von 21 s (DIN 53211, 4 mm-Becher, 23 °C)

3.1 Lackformulierung

Mit den in Tabelle 3 angegebenen Einwaagen der genannten Komponenten wurden Klarlacke hergestellt und anschließend auf eine Verarbeitungsviskosität entsprechend einer Auslaufzeit von 21 s (gemessen nach DIN 53211, 23 °C) eingestellt. (Sofern nicht anders angegeben sind alle Einwaagen in g gehalten.)

Tabelle 3

| Bindemittel | 1 (Polymer 2a) | Vergleich (DE 100 33 512.8, Beispiel 1) |
|---|---|---|
| Festkörper-Massenanteil | 80,0 % | 78,5 % |
| Hydroxylzahl | 140 mg/g | 165 mg/g |
| Bindemitteleinwaage | 88,5 | 88,5 |
| Lösungsmittelgemisch Nr. 1 | 11,3 | 11,3 |
| ®Additol VAL 4930 | 0,2 | 0,2 |
| Summe | 100,00 | 100,00 |
| ®Desmodur N 3300 | 33,9 | 41,8 |
| Lösungsmittelgemisch Nr. 2 | 34,1 | 38,5 |
| Lackbezeichnung | 3.1 | 3.2 |
| Lösungsmittelgemisch Nr. 1: Xylol / Methoxypropylacetat / Butylacetat (1 / 1 / 1 Massenteile) | | |
| Lösungsmittelgemisch Nr. 2: Butylacetat / Xylol / ®Shellsol A (60 / 25 / 15 Massenteile) | | |
| ®Shellsol A ist die Bezeichnung für ein aromatenreiches C9- bis C10-Kohlenwasserstoffe enthaltendes Lösungsmittel mit einem Siedebereich ab 167 °C. | | |
| ®Additol VAL 4930: Verlaufmittel (modifiziertes Silicon, Solutia Germany GmbH & Co. KG, Mainz-Kastel) | | |
| ®Desmodur N 3300: aliphatisches Polyisocyanat auf Basis von Hexamethylendiisocyanat (Bayer AG, Leverkusen) | | |

3.2 Lacktechnische Prüfung der Ultra-high solids Klarlacke

3.2.1 Aufzug auf Glasplatten

Die gemäß 3.1 hergestellten Klarlacke wurden mittels einer 200 µm-Rakel auf gereinigte Glasplatten aufgetragen und bei Raumtemperatur (23 °C, rel. Luftfeuchtigkeit 65 %) getrocknet. Es wurden die in Tabelle 4 angegebenen Eigenschaften erhalten.

Tabelle 4

| Prüfung der Klarlacke | | |
|---|---|---|
| Lackbezeichnung | 3.1 | 3.2 (Vergleich) |
| Aussehen der Lackfilme | Transparent | Transparent |
| Topfzeit (Potlife)        in h | 6 | 6 |
| Klebfreizeit            in h | 4 | 3,5 |
| Festkörper-Massenanteil      in % | 66 | 65 |
| Potlife = Topfzeit: Zeit in Stunden bis zur Verdoppelung der Ausgangsviskosität des Lackes  Klebfreizeit: Zeit in Stunden, bis der Lack nicht mehr klebt (152 µm Naßfilm, Daumenprüfung)  Festkörper-Massenanteil: praktisch (nach DIN EN ISO 3251) ermittelter Festkörper-Massenanteil (Anteil an nichtflüchtigen Verbindungen) im applikationsfertigen Lack | | |

Die erreichten Festkörper-Massenanteile lagen alle im Bereich um 65 Alle Produkte trockneten rasch an und zeigten eine vergleichbar lange Verarbeitungszeit, die in dem für die technische Lackapplikation gefordertem Bereich lag (mehr als 3 Stunden). Die Klebfreizeit ist entsprechend der Genauigkeit der Meßmethode gleich.

3.2.2 Spritzapplikation

Die unter 3. 1 beschriebenen Klarlacke wurden mittels einer handelsüblichen Becherpistole auf entfettete und gereinigte Stahlbleche (30 x 20 cm) gespritzt. Durch den Auftrag unterschiedlich vieler Schichten vom oberen zum unteren Blechrand ergab sich auf jedem Blech ein treppenartig gestuftes Schichtstärkenprofil. Dieses Profil blieb bei der forcierten Trocknung 30 Minuten im Umluftofen bei 80 °C in senkrechter Lage erhalten. Anschließend wurden die minimalen und maximalen Trockenfilmschichtstärken auf jedem Blech gemessen (siehe Tabelle 5), ebenso der Beginn der Bildung einer zusammenhängenden Lackschicht (Verlauf) und das erstmalige Auftreten von Bläschen im Lack ("Kochergrenze") bestimmt.

Tabelle 5

| Prüfergebnisse bei Spritzapplikation | | |
|---|---|---|
| Lackbezeichnung | 3.1 | 3.2 (Vergleich) |
| Trockenfilmstärke, Oberer Rand        in µm | 10 | 12 |
| Trockenfilmstärke, Unterer Rand        in µm | 120 | 120 |
| Verlauf            in µm | 16 | 16 |
| Bläschenbildung            in µm | Keine | >70 |

Der mit dem erfindungsgemäßen Bindemittel hergestellte Klarlack zeigte auch bei der maximalen Trockenfilmstärke von ca. 120 µm noch keine Kochblasen, selbst wenn forcierte Trocknung (30 Minuten, 80 °C) angewandt wurde. Dagegen wurden beim Vergleichslack bereits ab 70 µm Kochblasen aufgrund mangelhafter Entlüftungseigenschaften des Vergleichsbindemittels gefunden. Der Verlauf aller Lacke war als gleichwertig einzustufen.

3.3 UV-Vergilbung

Es wurden 300 µm starke Naßfilme auf weißen Kacheln aufgezogen und 7 Tage bei Raumtemperatur (23°C, 65 % rel. Luftfeuchte) getrocknet.
Die Kacheln mit dem Klarlack auf Basis des erfindungsgemäßen Bindemittels bzw. des Vergleichsbindemittels wurden 10mal durch eine UV-Beschichtungsanlage (Geschwindigkeit 4 m/min, Lampenleistung 2 × 80 W/cm) geschickt. Der Grad der Vergilbung wurde anschließend visuell beurteilt.

Bei dem Klarlack, der das erfindungsgemäße Bindemittel enthielt, war wie auch beim Vergleichslack keine Vergilbung feststellbar. Ein Handelsprodukt (Polyester-modifiziertes Acrylat, wobei der Polyester aromatische Bestandteile enthält), zeigte in diesem Test als Vergleichsmaterial eine starke Vergilbung.

3.4 Härteentwicklung und Lösungsmittelbeständigkeit ,

Die gemäß 3.1 hergestellten Klarlacke wurden mit einer 200μm-Rakel auf gereinigte Glasplatten aufgezogen. Nach 10 Minuten Ablüftzeit (23 °C, 65 % rel. Luftfeuchte) wurden die Prüfplatten 30 Minuten lang bei 80°C im Umluftofen forciert getrocknet. Nach der forcierten Trocknung wurden die Prüfplatten 1 Stunde bzw. 24 Stunden bei 23 °C und einer relativen Luftfeuchte von 65 % gelagert.

Nach 1 Stunde bzw. 24 Stunden wurden die Pendelhärten (nach DIN 53157) gemessen. Nach 24 Stunden wurden die Beständigkeit gegenüber Superbenzin und Xylol durch Auflegen von mit Xylol bzw. Superbenzin getränkten Wattebäuschen auf die Lackschicht und im Minutenabstand vorgenommenen Kratztests (Fingernagelprobe) bestimmt. Die Zeit, nach der die Lackschicht noch nicht erweicht war, wurde als Beständigkeitsmaß angegeben.

Tabelle 6

| Ergebnisse der Lackprüfung | | |
|---|---|---|
| Lackbezeichnung | 3.1 | 3.2 (Vergleich) |
| Trockenfilmdicke (ISO 2808)          in μm | 52 | 50 |
| Pendelhärte nach König (DIN 53157) | | |
| Nach 1 Stunde    in s | 142 | 140 |
| | 160 | 162 |
| Nach 24 Stunden          in s | | |
| Superbenzinbeständigkeit          in min | > 10 | > 10 |
| Xylolbeständigkeit          in min | > 10 | > 10 |

Der Klarlack auf Basis des erfindungsgemäßen Bindemittels zeigte trotz seiner äußerst niedermolekularen Natur hervorragend hohe Pendelhärten und Lösungsmittelbeständigkeit, ebenso wie der Vergleichslack.

**4 Herstellung von "airmix"- und "airless"-applizierbaren Weißlacken**

4.1 Lackformulierung

Mit den in Tabelle 7 angegebenen Einwaagen der genannten Komponenten wurden Weißlacke hergestellt und anschließend mit Lösungsmittelgemisch Nr. 2 auf eine Verarbeitungsviskosität entsprechend einer Auslaufzeit von 60 s (gemessen nach DIN 53211, 23 °C) für die "airmix"-Applikation bzw. von 90 s für die "airless"-Applikation eingestellt. Die genauen Rezepturen sind in Tabelle 7 aufgeführt (Einwaagen in g).

Tabelle 7

| Weißlacke | | |
|---|---|---|
| Bindemittel | 1 (Polymer 2a) | Vergleich (DE 100 33 512.8, Beispiel 1) |
| Festkörper-Massenanteil | 80 % | 78,5 % |
| Hydroxylzahl | 140 mg/g | 165 mg/g |
| | | |
| Komponente A: | | |
| Bindemitteleinwaage | 48,6 | 48,6 |
| Lösungsmittelgemisch Nr. 1 | 6,0 | 6,0 |

Tabelle 7   (fortgesetzt)

| Weißlacke | | |
|---|---|---|
| Bindemittel | 1 (Polymer 2a) | Vergleich (DE 100 33 512.8, Beispiel 1) |
| ®Additol XL 270 (Netzmittel) | 1,3 | 1,3 |
| Butyldiglykolacetat | 3,0 | 3,0 |
| ®Kronos 2310 | 35,1 | 35,1 |
| ®Thixatrol ST | 1,3 | 1,3 |
| ®Additol VXL 4930 (Verlaufmittel) | 0,3 | 0,3 |
| Lösungsmittelgemisch Nr. 2 | 4,0 | 4,0 |
| ®Perenol E1 (Entschäumer) | 0,4 | 0,4 |
| Summe | 100,00 | 100,00 |
| | | |
| Härter: | | |
| ®Desmodur N 3300 | 18,3 | 23,0 |
| Lösungsmittelgemisch Nr. 2 | 12,1 | 15,2 |
| | | |
| Lackbezeichnung | 4.1 | 4.2 |
| Lackfestkörper bei 60s | 75 % | 74 % |
| Lackfestkörper bei 90s | 81 % | 80 % |
| Massenverhältnis von flüchtigen Anteilen und Festkörper (60 s) | 25 / 75 = 33 % | 26 / 74 = 35 % |
| Massenverhältnis von flüchtigen Anteilen und Festkörper (90 s) | 19 / 81 = 23 % | 20 / 80 = 25 % |
| Lösungsmittelgemisch Nr. 1: Butylacetat / ®Shellsol A / Xylol (60 / 15 / 25 Massenteile) Lösungsmittelgemisch Nr. 2: ®Shellsol E / ®Shellsol A / Butylglykolacetat (60 / 15 /25 Massenteile) ®Additol XL 270: elektroneutrales Netz- und Dispergiermittel (Solutia Germany GmbH & Co. KG, Mainz-Kastel) ®Kronos 2310: Titandioxid-Pigment der Gruppe R2 (Kronos Titan GmbH, Leverkusen) ®Thixatrol ST: Thixotropiermittel auf Basis von Rizinusöl (Kronos Titan GmbH, Leverkusen) ®Additol VXL 4930: Verlaufmittel (Solutia Germany GmbH & Co. KG, Mainz-Kastel) ®Perenol E1: siliconfreier Entschäumer (Cognis GmbH, Düsseldorf) ®Desmodur N 3300: Polyisocyanat (Bayer AG, Leverkusen) | | |

4.2 Lacktechnische Prüfung

4.2.1 Auftrag mit 300 µm-Rakel

Die gemäß 4.1 hergestellten und auf eine Auslaufzeit von 60 s (DIN 53211, 23 °C) eingestellten Weißlacke wurden mit einer 300 µm-Rakel auf gereinigte Glasplatten aufgezogen und 7 Tage bei Raumtemperatur (23 °C, 65 % rel. Luftfeuchte) getrocknet. Die Oberflächen der Lackfilme wurden optisch auf Filmdefekte geprüft.

Die Trockenfilmschichtstärke betrug jeweils 125 µm. Der Lack auf Basis des erfindungsgemäßen Bindemittels zeigte in dieser Schichtstärke keine Kochblasen oder andere auf schlechte Entlüftungseigenschaften hinweisende Oberflächendefekte. Die mit dem Vergleichslack beschichteten Glasplatten wiesen dagegen zahlreiche Kochblasen und Nadelstiche auf.

4.2.2 "Airmix"-Verspritzung

Die gemäß 4.1 hergestellten Weißlacke wurden mit einer "Airmix"-Spritzpistole auf entfettete und gereinigte Stahlbleche (20 x 30 cm) aufgetragen. Der Auftrag erfolgte wie unter 3.2.2 beschrieben, so daß sich ein stufenartiges Schichtstärkenprofil ergab.

Die beschichteten Bleche wurden 7 Tage bei 23 °C und 65 % rel. Luftfeuchte senkrecht stehend getrocknet.

Tabelle 8

| Ergebnisse der Lackprüfung | | | |
|---|---|---|---|
| Lackbezeichnung | | 4.1 | 4.2 (Vergleich) |
| Trockenfilmstärke; Oberer Rand | in µm | 30 | 32 |
| Trockenfilmstärke; Unterer Rand | in µm | 200 | 185 |
| Bläschenbildung bei Schichtdicken ab | µm | Nicht beobachtet | 40 |

Der Weißlack auf Basis des erfindungsgemäßen Bindemittels ist mittels Airmix-Technik verspritzbar und zeigte selbst in Trockenfilmschichtstärken von ca. 200 µm bei der relativ hohen Verarbeitungsviskosität (Auslaufzeit von 60 Sekunden nach DIN 53211, 4 mm-Becher, 23 °C) keine Oberflächendefekte wie Kochblasen oder Nadelstiche. Im Gegensatz dazu wies der Vergleichslack schon ab ca. 40 µm zahlreiche Kochblasen und Nadelstiche auf.

4.2.3 "Airless"-Verspritzung

Die gemäß 4.1 hergestellten und mit Lösungsmittelgemisch Nr. 2 auf eine Auslaufzeit von 90 s (DIN 53211, 4 mm-Becher, 23 °C) eingestellten Weißlacke wurden mit einer "Airless"-Spritzpistole auf entfettete und gereinigte Stahlbleche (20 x 30 cm) aufgetragen. Der Auftrag erfolgte wie unter 3.2.2 beschrieben, so daß sich ein stufenartiges Schichtstärkenprofil ergab.

Die beschichteten Bleche wurden 7 Tage bei 23 °C und 65 % rel. Luftfeuchte senkrecht stehend getrocknet.

Tabelle 9

| Ergebnisse der Lackprüfung | | | |
|---|---|---|---|
| Lackbezeichnung | | 4.1 | 4.2 (Vergleich) |
| Trockenfilmstärke; Oberer Rand | in µm | 45 | 50 |
| Trockenfilmstärke; Unterer Rand | in µm | 320 | 280 |
| Bläschenbildung ab | µm | 260 | 50 |

Der Weißlack auf Basis des erfindungsgemäßen Bindemittels ist mittels "Airless"-Technik verspritzbar und zeigte erst bei hohen Trockenfilmschichtstärken von über ca. 250 µm bei der Verarbeitungsviskosität von 90 Sekunden (gemessen als Auslaufzeit nach DIN 53211,4 mm-Becher, 23 °C) Oberflächendefekte wie Kochblasen oder Nadelstiche. Im Gegensatz dazu entlüftete der Vergleichslack unter den Bedingungen der "Airless"-Applikation überhaupt nicht und wies deshalb schon in dünner Schicht über das gesamte Blech zahlreiche Kochblasen und Nadelstiche auf.

**Patentansprüche**

**1.** Hydroxylgruppen-haltige Polymere, die Anteile von Polyestern und von Polymerisaten aus olefinisch ungesättigten Monomeren aufweisen, wobei die Polyester einen Baustein enthalten abgeleitet von Tris-hydroxyäthylisocyanurat oder Trishydroxypropylisocyanurat oder Di- oder Polyepoxy-Verbindungen **A,** einen Baustein abgeleitet von aliphatischen cyclischen Di-oder Polycarbonsäuren **B**, sowie gegebenenfalls weitere Bausteine abgeleitet von verzweigten aliphatischen acyclischen Di- oder Polyhydroxy-verbindungen **C**, von aliphatischen linearen acyclischen Di- oder Polyhydroxy-Verbindungen **D**, die mindestens zwei Hydroxylgruppen je Molekül aufweisen, von polyfunktionellen Verbindungen **E**, wobei die Verbindungen **E** ausgewählt sind aus aliphatischen linearen und verzweigten Dicarbonsäuren **E1** und aromatischen Di- und Polycarbonsäuren **E2** mit mindestens zwei Carboxylgruppen pro Molekül, und von monofunktionellen Verbindungen **F,** wobei die Verbindungen **F** ausgewählt sind aus Monocarbonsäuren, Monoalkoholen und Monoepoxiden, **dadurch gekennzeichnet, daß** die Polyester abgeleitet sind von jeweils genau einer Verbindung aus den Verbindungen **A** und aus den Verbindungen **B** sowie nicht mehr als einer weiteren Verbindung ausgewählt aus den Gruppen **C, D, E** und **F,** und die Polymerisate Bausteine enthalten von olefinisch ungesättigten Alkylestern **G** von aliphatischen, linearen, verzweigten oder cyclischen olefinisch ungesättigten Monocarbonsäuren und/oder Dicarbonsäuren, olefinisch ungesättigten Hydroxyalkylestern **H** von einer der unter **G** genannten Säuren, mindestens einem weiteren olefinisch ungesättigten Monomeren **I** ausgewählt aus Vinylaromaten, Vinylestern, halogenierten Monomeren, ungesättigten Nitrilen, Amiden bzw. Diamiden von ungesättigten Monocarbonsäuren, Vinyl- und Allyläthern, sowie gegebenenfalls Carbonsäuren **J,** ausgewählt aus den unter **G** genannten Monocarbonsäuren oder Dicarbonsäuren in unveresterter oder halbveresterter Form.

2. Hydroxylgruppen-haltige Polymere nach Anspruch 1, **dadurch gekennzeichnet, daß** ihre Hydroxylzahl 40 bis 250 mg/g beträgt.

3. Hydroxylgruppen-haltige Polymere nach Anspruch 1, **dadurch gekennzeichnet, daß** ihre Säurezahl 0 bis 30 mg/g beträgt.

4. Hydroxylgruppen-haltige Polymere nach Anspruch 1, **dadurch gekennzeichnet, daß** ihre gewichtsmittlere molare Masse höchstens 3500 g/mol beträgt.

5. Hydroxylgruppen-haltige Polymere nach Anspruch 1, **dadurch gekennzeichnet, daß** die Polyester eine gewichtsmittlere molare Masse von bis zu 1750 g/mol aufweisen.

6. Hydroxylgruppen-haltige Polymere nach Anspruch 1, **dadurch gekennzeichnet, daß** die Polyester maximal drei aliphatische Bausteine aus den Gruppen **A**, **B** und **C** enthalten, derart, daß von jeder der Gruppen nur eine Verbindung in dem Polyester enthalten ist.

7. Hydroxylgruppen-haltige Polymere nach Anspruch 1, **dadurch gekennzeichnet, daß** sie eine Mischung von zwei oder mehreren Polyestern unterschiedlicher Zusammensetzung enthalten.

8. Hydroxylgruppen-haltige Polymere nach Anspruch 1, **dadurch gekennzeichnet, daß** die Polyester zusätzlich einen Strukturbaustein aus einer vierten Gruppe enthalten, wobei die Summe der Massen der Strukturbausteinen aus den Gruppen **A, B** und einer der Gruppen **C, D, E** und **F** mindestens 90 % der Masse des Polyesters ausmacht.

9. Hydroxylgruppen-haltige Polymere nach Anspruch 1, **dadurch gekennzeichnet, daß** der Polyester Bausteine abgeleitet von der 1,2- oder der 1,4-Cyclohexandicarbonsäure enthält.

10. Hydroxylgruppen-haltige Polymere nach Anspruch 1, **dadurch gekennzeichnet, daß** der Polyester Bausteine enthält, die abgeleitet sind von Neopentylglykol, 2,2,4-Trimethylpentandiol, 2,2,4-Trimethylhexandiol, 2,4,4-Trimethylhexandiol, Trimethyloläthan, Trimethylolpropan und/oder Pentaerythrit.

11. Hydroxylgruppen-haltige Polymere nach Anspruch 1, **dadurch gekennzeichnet, daß** der Polyester Bausteine enthält, die von den Glycidylestern von in $\alpha$-Stellung verzweigten aliphatischen Monocarbonsäuren abgeleitet sind.

12. Hydroxylgruppen-haltige Polymere nach Anspruch 1, **dadurch gekennzeichnet, daß** sie Massenanteile von 30 bis 70 % des Polyesters und 70 bis 30 % des Polymerisats enthalten.

13. Hydroxylgruppen-haltige Polymere nach Anspruch 1, **dadurch gekennzeichnet, daß** die Polymerisate Bausteine enthalten, die abgeleitet sind von Methyl(meth)acrylat, Äthyl(meth)acrylat, n-Butyl(meth)acrylat, tert.- Butyl(meth)acrylat, Isobornyl(meth)acrylat und/oder Isofenchyl(meth)acrylat.

14. Hydroxylgruppen-haltige Polymere nach Anspruch 1, **dadurch gekennzeichnet, daß** die Polymerisate Bausteine enthalten, die abgeleitet sind von Hydroxyäthyl(meth)acrylat, den isomeren Hydroxypropyl(meth)acrylaten und/oder Hydroxybutyl(meth)acrylat.

15. Hydroxylgruppen-haltige Polymere nach Anspruch 1, **dadurch gekennzeichnet, daß** die Polymerisate Bausteine enthalten, die abgeleitet sind von Styrol und/oder Vinyltoluol.

16. Hydroxylgruppen-haltige Polymere nach Anspruch 1, **dadurch gekennzeichnet, daß** die Polymerisate Bausteine enthalten, die abgeleitet sind von Acryl- und/oder Methacrylsäure.

17. Hydroxylgruppen-haltige Polymere nach Anspruch 1, **dadurch gekennzeichnet, daß** die Polyester zusätzlich Bausteine enthalten von einer oder mehrerer der Gruppen der aliphatischen linearen acyclischen Di- oder Polyhydroxy-Verbindungen **D**, die mindestens zwei Hydroxylgruppen je Molekül aufweisen, der polyfunktionellen Verbindungen **E,** wobei die Verbindungen **E** ausgewählt sind aus aliphatischen linearen und verzweigten Dicarbonsäuren **E1** und aromatischen Di- und Polycarbonsäuren **E2** mit mindestens zwei Carboxylgruppen pro Molekül, und der monofunktionellen Verbindungen **F**, wobei die Verbindungen **F** ausgewählt sind aus Monocarbonsäuren, Monoalkoholen und Monoepoxiden.

18. Verfahren zur Herstellung von Hydroxylgruppen-haltigen Polymeren nach Anspruch 1, **dadurch gekennzeichnet, daß** in Gegenwart eines Polyesters enthaltend einen Baustein abgeleitet von Tris-hydroxyäthylisocyanurat oder Trishydroxypropylisocyanurat oder Di- oder Polyepoxy-Verbindungen **A,** einen Baustein abgeleitet von aliphatischen cyclischen Di-oder Polycarbonsäuren **B**, und verzweigten aliphatischen acyclischen Di- oder Polyhydroxyverbindungen **C,** wobei die Polyester abgeleitet sind von jeweils genau einer Verbindung aus den Verbindungen A und aus den Verbindungen **B** sowie nicht mehr als einer weiteren Verbindung ausgewählt aus den Gruppen **C, D, E** und **F**, Polymerisate gebildet werden durch radikalisch initiierte Copolymerisation von olefinisch ungesättigten Alkylestern **G** von aliphatischen, linearen, verzweigten oder cyclischen olefinisch ungesättigten Monocarbonsäuren und/oder Dicarbonsäuren, olefinisch ungesättigten Hydroxyalkylestern **H** von einer der unter **G** genannten Säuren, mindestens einem weiteren olefinisch ungesättigten Monomeren **I** ausgewählt aus Vinylaromaten, Vinylestern, halogenierten Monomeren, ungesättigten Nitrilen, Amiden bzw. Diamiden von ungesättigten Monocarbonsäuren, Vinyl- und Allyläthern, sowie gegebenenfalls Carbonsäuren **J**, ausgewählt aus den unter **G** genannten Monocarbonsäuren oder Dicarbonsäuren in unveresterter oder halbveresterter Form.

19. Verfahren nach Anspruch 18, **dadurch gekennzeichnet, daß** der Polyester zusätzlich zu oder anstelle von den Komponenten **C** Bausteine enthält, die abgeleitet sind von einer aliphatischen linearen acyclischen Di- oder Polyhydroxy-Verbindung **D,** die mindestens zwei Hydroxylgruppen je Molekül aufweisen, einer polyfunktionellen Verbindung **E,** wobei die Verbindung **E** ausgewählt ist aus aliphatischen linearen und verzweigten Dicarbonsäuren **E1** und aromatischen Di- und Polycarbonsäuren **E2** mit mindestens zwei Carboxylgruppen pro Molekül, und den monofunktionellen Verbindungen **F**, wobei die Verbindungen **F** ausgewählt sind aus Monocarbonsäuren, Monoalkoholen und Monoepoxiden.

20. Beschichtungsmittel enthaltend Hydroxylgruppen-haltige Polymere gemäß Anspruch 1.

21. Beschichtungsmittel nach Anspruch 20, **dadurch gekennzeichnet, daß** sie zusätzlich weitere reaktive Bindemittel oder Verdünner enthalten.

22. Beschichtungsmittel nach Anspruch 20, **dadurch gekennzeichnet, daß** sie als Härter Aminoplastharze, Polyisocyanate oder Anhydridgruppen-haltige Verbindungen enthalten.

**Claims**

1. A hydroxyl-containing polymer which comprises fractions of polyesters and fractions of addition polymers formed from olefinically unsaturated monomers, the polyesters containing a unit derived from trishydroxyethyl isocyanurate or trishydroxypropyl isocyanurate or diepoxy or polyepoxy compounds **A**, a unit derived from aliphatic cyclic dicarboxylic or polycarboxylic acids **B**, and, where appropriate, further units derived from branched aliphatic acyclic dihydroxy or polyhydroxy compounds **C**, from aliphatic linear acyclic dihydroxy or polyhydroxy compounds **D** which contain at least two hydroxyl groups per molecule, from polyfunctional compounds **E**, the compounds **E** being selected from aliphatic linear and branched dicarboxylic acids **E1** and from aromatic dicarboxylic and polycarboxylic acids **E2** containing at least two carboxyl groups per molecule, and from monofunctional compounds **F**, the compounds **F** being selected from monocarboxylic acids, monoalcohols, and monoepoxides, wherein the polyesters are derived from in each case exactly one compound from the compounds **A** and from the compounds **B** and also not more than one further compound selected from the groups **C, D, E**, and **F**, and the addition polymers containing units of olefinically unsaturated alkyl esters **G** of aliphatic, linear, branched or cyclic olefinically unsaturated monocarboxylic and/or dicarboxylic acids, olefinically unsaturated hydroxyalkyl esters **H** of one of the acids specified under **G,** at least one further olefinically unsaturated monomer **I** selected from vinylaromatics, vinyl esters, halogenated monomers, unsaturated nitriles, amides or diamides of unsaturated monocarboxylic acids, vinyl ethers, and allyl ethers, and also, where appropriate, carboxylic acids **J**, selected from the monocarboxylic acids specified under **G** or dicarboxylic acids specified under **G** in unesterified or monoesterified form.

2. The hydroxyl-containing polymer as claimed in claim 1 whose hydroxyl number is from 40 to 250 mg/g.

**3.** The hydroxyl-containing polymer as claimed in claim 1 whose acid number is from 0 to 30 mg/g.

**4.** The hydroxyl-containing polymer as claimed in claim 1 whose weight-average molar mass is not more than 3500 g/mol.

**5.** The hydroxyl-containing polymer as claimed in claim 1, wherein the polyesters have a weight-average molar mass of up to 1750 g/mol.

**6.** The hydroxyl-containing polymer as claimed in claim 1, wherein the polyesters contain not more than three aliphatic units from groups **A**, **B** and **C** such that only one compound from each of the groups is present in the polyester.

**7.** The hydroxyl-containing polymer as claimed in claim 1, comprising a mixture of two or more polyesters of different composition.

**8.** The hydroxyl-containing polymer as claimed in claim 1, wherein the polyesters further contain a structural unit from a fourth group, the sum of the masses of the structural units from groups **A, B** and one of groups **C, D, E,** and **F** making up at least 90% of the mass of the polyester.

**9.** The hydroxyl-containing polymer as claimed in claim 1, wherein the polyester contains units derived from 1,2- or 1,4-cyclohexanedicarboxylic acid.

**10.** The hydroxyl-containing polymer as claimed in claim 1, wherein the polyester contains units derived from neopentyl glycol, 2,2,4-trimethylpentanediol, 2,2,4-trimethylhexanediol, 2,4,4-trimethylhexanediol, trimethylolethane, trimethylolpropane and/or pentaerythritol.

**11.** The hydroxyl-containing polymer as claimed in claim 1, wherein the polyester contains units derived from the glycidyl esters of $\alpha$-branched aliphatic monocarboxylic acids.

**12.** The hydroxyl-containing polymer as claimed in claim 1, comprising mass fractions of from 30 to 70% of the polyester and from 70 to 30% of the addition polymer.

**13.** The hydroxyl-containing polymer as claimed in claim 1, wherein the addition polymers contain units derived from methyl (meth)acrylate, ethyl (meth)acrylate, n-butyl (meth)acrylate, tert-butyl (meth)acrylate, isobornyl (meth)acrylate and/or isofenchyl (meth)acrylate.

**14.** The hydroxyl-containing polymer as claimed in claim 1, wherein the addition polymers contain units derived from hydroxyethyl (meth)acrylate, the isomeric hydroxypropyl (meth)acrylates and/or hydroxybutyl (meth)acrylate.

**15.** The hydroxyl-containing polymer as claimed in claim 1, wherein the addition polymers contain units derived from styrene and/or vinyltoluene.

**16.** The hydroxyl-containing polymer as claimed in claim 1, wherein the addition polymers contain units derived from acrylic and/or methacrylic acid.

**17.** The hydroxyl-containing polymer as claimed in claim 1, wherein the polyesters further contain units from one or more of the groups of the aliphatic linear acyclic dihydroxy or polyhydroxy compounds **D** which contain at least two hydroxyl groups per molecule, the polyfunctional compounds **E**, the compounds **E** being selected from aliphatic linear and branched dicarboxylic acids **E1** and aromatic dicarboxylic and polycarboxylic acids **E2** containing at least two carboxyl groups per molecule, and the monofunctional compounds **F**, the compounds **F** being selected from monocarboxylic acids, monoalcohols, and monoepoxides.

**18.** A process for preparing a hydroxyl-containing polymer as claimed in claim 1, which comprises forming, in the presence of a polyester containing a unit derived from trishydroxyethyl isocyanurate or trishydroxypropyl isocyanurate or diepoxy or polyepoxy compounds **A**, a unit derived from aliphatic cyclic dicarboxylic or polycarboxylic acids **B**, and branched aliphatic acyclic dihydroxy or polyhydroxy compounds **C**, the polyesters being derived from in each case exactly one compound from the compounds **A** and from the compounds **B** and also not more than one further compound selected from the groups **C, D, E,** and **F**, addition polymers formed by free-radically initiated copolymerization of olefinically unsaturated alkyl esters **G** of aliphatic, linear, branched or cyclic olefinically unsaturated monocarboxylic and/or dicarboxylic acids, olefinically unsaturated hydroxyalkyl esters **H** of one of the acids specified under **G**, at least one further olefinically unsaturated monomer **I** selected from vinylaromatics, vinyl esters, halogenated monomers, unsaturated nitriles, amides or diamides of unsaturated monocarboxylic acids, vinyl ethers, and allyl ethers, and also, where appropriate, carboxylic acids **J**, selected from the monocarboxylic acids specified under **G** or dicarboxylic acids specified under **G** in unesterified or monoesterified form.

19. The process as claimed in claim 18, wherein the polyester, in addition to or instead of the components **C,** contains units derived from an aliphatic linear acyclic dihydroxy or polyhydroxy compound **D** which contains at least two hydroxyl groups per molecule, polyfunctional compound **E**, the compound **E** being selected from aliphatic linear and branched dicarboxylic acids **E1** and aromatic dicarboxylic and polycarboxylic acids **E2** containing at least two carboxyl groups per molecule, and the monofunctional compounds **F**, the compounds **F** being selected from monocarboxylic acids, monoalcohols, and monoepoxides.

20. A coating composition comprising a hydroxyl-containing polymer as claimed in claim 1.

21. The coating composition as claimed in claim 20, further comprising other reactive binders or diluents.

22. The coating composition as claimed in claim 20, comprising as curatives amino resins, polyisocyanates or compounds containing anhydride groups.

**Revendications**

1. Polymères contenant des groupes hydroxyle, qui comprennent certaines proportions de polyesters et de polymères obtenus à partir de monomères à insaturation oléfinique, où les polyesters contiennent un composant qui dérive de l'isocyanurate de trishydroxyéthyle ou de l'isocyanurate de trishydroxypropyle, ou des composés di- ou polyépoxydés A, un composant qui dérive d'acides di- ou polycarboxyliques aliphatiques cycliques B, et éventuellement d'autres composants qui dérivent de composés di- ou polyhydroxylés acycliques aliphatiques ramifiés C, de composés di- ou polyhydroxylés acycliques linéaires aliphatiques D, qui comprennent au moins deux groupes hydroxyle par molécule, de composés polyfonctionnels E, les composés E étant choisis parmi les acides dicarboxyliques E1 aliphatiques à chaîne droite et ramifiée et les acides di- et polycarboxyliques aromatiques E2 ayant au moins deux groupes carboxyle par molécule, et de composés monofonctionnels F, les composés F étant choisis parmi les acides monocarboxyliques, les monoalcools et les monoépoxydes, **caractérisés en ce que** les polyesters dérivent chacun d'exactement un composé choisi parmi les composés A et les composés B, et de pas plus d'un autre composé choisi parmi les groupes C, D, E et F, et les polymères contiennent des composants d'esters alkyliques à insaturation oléfinique G d'acides monocarboxyliques et/ou d'acides dicarboxyliques aliphatiques, à chaîne droite ou ramifiée ou cyclique et à insaturation oléfinique, d'esters hydroxyalkyliques à insaturation oléfinique H de l'un des acides mentionnés en G, d'au moins un autre monomère I à insaturation oléfinique choisi parmi les composés vinylaromatiques, les esters vinyliques, les monomères halogénés, les nitriles insaturés, les amides ou les diamides d'acides monocarboxyliques insaturés, les vinyléthers et les allyléthers, et éventuellement les acides carboxyliques J choisis parmi les acides monocarboxyliques ou les acides dicarboxyliques mentionnés en G sous forme non estérifiée ou semi-estérifiée.

2. Polymères contenant des groupes hydroxyle selon la revendication 1, **caractérisés en ce que** leur indice d'hydroxyle est de 40 à 250 mg/g.

3. Polymères contenant des groupes hydroxyle selon la revendication 1, **caractérisés en ce que** leur indice d'acide est de 0 à 30 mg/g.

4. Polymères contenant des groupes hydroxyle selon la revendication 1, **caractérisés en ce que** leur masse moléculaire moyenne en masse est d'au plus 3500 g/mole.

5. Polymères contenant des groupes hydroxyle selon la revendication 1, **caractérisés en ce que** les polyesters présentent une masse moléculaire moyenne en masse allant jusqu'à 1750 g/mole.

6. Polymères contenant des groupes hydroxyle selon la revendication 1, **caractérisés en ce que** les polyesters contiennent au plus trois composants aliphatiques choisis parmi les groupes A, B et C, de telle sorte que seul un composé de chacun des groupes soit contenu dans le polyester.

7. Polymères contenant des groupes hydroxyle selon la revendication 1, **caractérisés en ce qu'**ils contiennent un mélange d'au moins deux polyesters ayant des compositions différentes.

8. Polymères contenant des groupes hydroxyle selon la revendication 1, **caractérisés en ce que** les polyesters contiennent en outre un élément structural d'un quatrième groupe, la somme des masses des éléments structuraux des groupes A, B et de l'un des groupes C, D, E et F représentant au moins 90 % de la masse du polyester.

9. Polymères contenant des groupes hydroxyle selon la revendication 1, **caractérisés en ce que** le polyester contient des composants qui dérivent de l'acide 1,2- ou de l'acide 1,4-cyclohexanedicarboxylique.

10. Polymères contenant des groupes hydroxyle selon la revendication 1, **caractérisés en ce que** le polyester contient des composants qui dérivent du néopentylglycol, du 2,2,4-triméthylpentanediol, du 2,2,4-triméthylhexanediol, du 2,4,4-triméthylhexanediol, du triméthyloléthane, du triméthylolpropane et/ou du pentaérythritol.

11. Polymères contenant des groupes hydroxyle selon la revendication 1, **caractérisés en ce que** le polyester contient des composants qui dérivent des esters glycidyliques d'acides monocarboxyliques aliphatiques ramifiés en position α.

12. Polymères contenant des groupes hydroxyle selon la revendication 1, **caractérisés en ce qu'**ils contiennent de 30 à 70 % en masse du polyester et de 70 à 30 % en masse du polymère.

13. Polymères contenant des groupes hydroxyle selon la revendication 1, **caractérisés en ce que** les polymères contiennent des composants qui dérivent du (méth)acrylate de méthyle, du (méth)acrylate d'éthyle, du (méth)acrylate de n-butyle, du (méth)acrylate de tert-butyle, du (méth)acrylate d'isobornyle et/ou du (méth)acrylate d'isofenchyle.

14. Polymères contenant des groupes hydroxyle selon la revendication 1, **caractérisés en ce que** les polymères contiennent des composants qui dérivent du (méth)acrylate d'hydroxyéthyle, des (méth) acrylates d'hydroxypropyle isomères et/ou du (méth)acrylate d'hydroxybutyle.

15. Polymères contenant des groupes hydroxyle selon la revendication 1, **caractérisés en ce que** les polymères contiennent des composants qui dérivent du styrène et/ou du vinyltoluène.

16. Polymères contenant des groupes hydroxyle selon la revendication 1, **caractérisés en ce que** les polymères contiennent des composants qui dérivent de l'acide acrylique et/ou de l'acide méthacrylique.

17. Polymères contenant des groupes hydroxyle selon la revendication 1, **caractérisés en ce que** les polyesters contiennent en outre des composants choisis parmi un ou plusieurs des groupes des composés di- ou polyhydroxylés acycliques linéaires aliphatiques D qui comprennent au moins deux groupes hydroxyle par molécule, des composés polyfonctionnels E, les composés E étant choisis parmi les acides dicarboxyliques aliphatiques E1 à chaîne droite et ramifiée et les acides di- et polycarboxyliques aromatiques E2 ayant au moins deux groupes carboxyle par molécule, et des composés monofonctionnels F, les composés F étant choisis parmi les acides monocarboxyliques, les monoalcools et les monoépoxydes.

18. Procédé de préparation de polymères contenant des groupes hydroxyle selon la revendication 1, **caractérisé en ce que**, en présence d'un polyester contenant un composant qui dérive de l'isocyanurate de tris-hydroxyéthyle ou de l'isocyanurate de tris-hydroxypropyle ou de composés di- ou polyépoxydés A, un composant qui dérive d'acides di- ou polycarboxyliques cycliques aliphatiques B, et de composés di- ou polyhydroxylés acycliques aliphatiques ramifiés C, les polyesters dérivant chacun exactement d'un composé choisi parmi les composés A et les composés B, ainsi que de pas plus d'un autre composé choisi parmi les groupes C, D, E et F, on forme des polymères par une copolymérisation radicalaire d'esters alkyliques à insaturation oléfinique G d'acides monocarboxyliques et/ou d'acides dicarboxyliques aliphatiques à chaîne droite ou ramifiée ou cyclique et à insaturation oléfinique, d'esters hydroxyalkyliques H à insaturation oléfinique de l'un des acides mentionnés en G, d'au moins un autre monomère I à insaturation oléfinique choisi parmi les composés vinylaromatiques, les esters vinyliques, les monomères halogénés, les nitriles insaturés, les amides ou diamides d'acides monocarboxyliques insaturés, les vinyléthers et les allyléthers, et éventuellement d'acides carboxyliques J choisis parmi les acides monocarboxyliques ou les acides dicarboxyliques mentionnés en G, sous forme non estérifiée ou semi-estérifiée.

**19.** Procédé selon la revendication 18, **caractérisé en ce que** le polyester contient, en plus ou en remplacement des composants C, des éléments structuraux qui dérivent d'un composé di- ou polyhydroxylé acyclique linéaire aliphatique D, qui comprend au moins deux groupes hydroxyle par molécule, d'un composé polyfonctionnel E, le composé E étant choisi parmi les acides dicarboxyliques aliphatiques E1 à chaîne droite et ramifiée et les acides di- et polycarboxyliques aromatiques E2 ayant au moins deux groupes carboxyle par molécule, et des composés monofonctionnels F, les composés F étant choisis parmi les acides monocarboxyliques, les monoalcools et les monoépoxydes.

**20.** Compositions de revêtement contenant des polymères contenant des groupes hydroxyle selon la revendication 1.

**21.** Compositions de revêtement selon la revendication 20, **caractérisées en ce qu'**elles contiennent en outre d'autres liants réactifs ou diluants.

**22.** Compositions de revêtement selon la revendication 20, **caractérisées en ce qu'**elles contiennent en tant que durcisseurs des résines aminoplastes, des polyisocyanates ou des composés contenant des groupes anhydride.